Europäisches Patentamt

European Patent Office

Office européen des brevets

(11) Publication number: **0 450 610 A2**

# EUROPEAN PATENT APPLICATION

(21) Application number: 91105302.3

(22) Date of filing: 04.04.91

(51) Int. Cl.5: **H04M 3/42, H04M 7/00, H04Q 3/70**

(30) Priority: 05.04.90 US 505855

(43) Date of publication of application:
09.10.91 Bulletin 91/41

(84) Designated Contracting States:
CH DE FR GB IT LI NL SE

(71) Applicant: TEXAS INSTRUMENTS
INCORPORATED
13500 North Central Expressway
Dallas Texas 75265(US)

(72) Inventor: Scruggs, Jeffrey L.
13005 Heinemann Drive
Austin, Texas 78727(US)
Inventor: Price, Barry R.
1534 Springaire Lane
Lewisville, Texas 75067(US)

(74) Representative: Leiser, Gottfried, Dipl.-Ing. et
al
Patentanwälte Prinz, Leiser, Bunke & Partner
Manzingerweg 7
W-8000 München 60(DE)

(54) **Telecommunications voice and data services network architecture.**

(57) A telecommunications system is shown including a presentation interface for communication with callers to the system, a database operably connected to the presentation interface for transmission of data between said presentation interface and the database. The presentation interface includes a data link for communication with a telecommunications network and a voice signal processor connected to the data link.

Other systems and apparatuses are also disclosed.

FIG. 1

## CROSS-REFERENCE TO RELATED APPLICATIONS

This application is related to the following applications assigned to the assignee of this application, filed concurrently herewith and which are hereby incorporated by reference as if fully set forth herein:
Application Serial Number 505,747 entitled
"Method and Apparatus for Providing Integrated Access to Telecommunication Based Services";
Application Serial Number 505,871 entitled
"User Interfaces to Telecommunications Based Services";
Application Serial Number 505,870 entitled
"Call Delivery Telecommunications Service"; and
Application Serial Number 507,076 entitled
"Method and Apparatus for Securing Access to Telecommunications Based Assets and Services".

## FIELD OF THE INVENTION

The present invention relates generally to telecommunications systems providing enhanced voice and data services, and specifically to such systems for simultaneously supporting multiple voice and data services in a telecommunications based environment.

## BACKGROUND OF THE INVENTION

The telecommunications industry has experienced significant changes over recent years. More and more services are now being offered to customers which can be accessed via existing, or in some cases new and dedicated, telecommunications networks. The variety of services now available reflects the competitive nature of the marketplace as well as the advent of new technologies. Telecommunications service providers are offering their customers a plurality of enhanced services designed to increase revenue and expand the utility of telephone instruments. Telecommunications customers via their telephone can now access databases, bank accounts, securities accounts, messaging systems and various other services in addition to long distance telephone service.

Access to these services generally is controlled through the use of authorization codes assigned to users of the services. When a customer desires access to a particular service to which he or she has subscribed, the authorization code must be entered, usually via the touchtone pad on the telephone instrument, before access is granted. Alternatively, certain telephone equipment may permit the entry of the authorization code by passing a card similar to a credit card through a magnetic card reader which detects and transmits the authorization code over the telephone lines thus allowing the customer to avoid entering the code by hand.

One drawback with these methods of authorizing access to a telecommunications service is that anyone with access to a legitimate authorization code can access the service, thereby presenting a serious security problem. This problem is not unique to any particular sequence of steps for accessing the service, since the authorization code is subject to being lost or stolen. If, for example, a subscriber loses the authorization code, or has it stolen, the system can be accessed by an unauthorized subscriber until the authorization code is canceled. In the interim, unauthorized services can result in substantial financial losses to the subscriber and/or the telecommunications service provider. Also, the subscriber is required to enroll once again to access the service. A new authorization code must be issued to the subscriber, and typically a new authorization or subscriber identification card must be created and sent to the subscriber for future use. The subscriber, therefore, is put in the position of having to become accustomed to using a different and unfamiliar authorization code. The subscriber essentially enrolls as a user of the system once again. These enrollment procedures are significantly different than the procedures a subscriber uses to access and use the system on a regular basis. The experience can be extremely frustrating for subscribers, and potentially detrimental to service providers who are dependent upon customer satisfaction to expansion of their services.

Some telecommunications services, such as long distance calling for example, are accessed using a dialing sequence which generally requires that the caller first access the service and then seek authorization to proceed. For example, the current industry standard dial plan for long distance calling card service access requires a subscriber to first access the service by dialing a "0" followed by the 10-digit destination number which the subscriber is calling. The system then prompts the subscriber to enter his or her authorization code which typically is a 14-digit number similar to a credit card number. If the authorization code is recognized by the system as valid, service access is authorized and the call is completed. No commonly available dialing plan supports the opposite dialing sequence, i.e., entry of the authorization code before entry of the destination number, and no currently available service using any dial plan incorporates the caller's voice as a system access security mechanism.

One problem associated with the dialing sequence such as that employed in connection with long distance calling is that since every caller is required to attempt to access the service by entering a 10-digit destination number before authorization is granted, significant call hold time is wasted for those callers who fail the authorization step for one reason or another. The hold time is expensive and does not produce revenue for the telecommunications service provider since charges are made only for the time the caller is connected to the destination number. The result is an inefficient use of the service provider's assets.

Methods and apparatus for securing access to telecommunication based services have been developed, such as that disclosed in the aforementioned U.S. Patent Application S.N. 507,076. However, if a subscriber to a variety of services desires to access more than one service in succession, the subscriber generally must attempt to access, and obtain authorization for, each service separately. When the subscriber is finished using one service such as a database, for example, and then desires to access another service such as a bank account, for example, a renewed attempt to access the second service must be initiated. Additionally, the subscriber's attempt to contact the second service typically requires that the process of accessing the service utilize a separate and different access number, and/or a distinct authorization code. If a subscriber desires access to a wide variety of enhanced services, he or she typically has an equally wide variety of authorization and access codes to remember and protect from unauthorized use. Such complexity promotes confusion, and may perhaps deter a subscriber's use of such services.

Access to a wide variety of enhanced telecommunications based services can be accomplished in many ways. Voice verification technology such as that disclosed in U.S. Patent Application S.N. 350,060, which is hereby incorporated herein by reference, can be utilized to provide a method of securing access to telecommunication based services such as, for example, voice messaging, virtual private networks, long distance calling services, call delivery systems, personal banking or securities services, and a variety of database services.

As more enhanced services become available and are offered by telecommunications based service providers there will be an increased need for procedures which allow a uniform, integrated method of accessing a plurality of services.

Additionally, telecommunications equipment generally supports only a single telecommunications service. If multiple services are supported by the equipment, usually only one service will be delivered at a time, and only one service will be provided at any particular equipment installation. The equipment used typically is not easily expandable, if at all, from a system supporting a small number of customers, relatively low call volumes, or few service types to a larger system supporting a very large number of customers, substantially larger call volumes, or an array of many service types. The systems generally cannot easily be geographically distributed, and they typically do not support centralized administration and maintenance of many services.

## SUMMARY OF THE INVENTION

One object of the present invention is to provide a telecommunications architecture which makes use of a subscriber's voice to authorize service access.

Another object of the present invention is to provide a telecommunications services architecture which is capable of providing subscribers with access to a plurality of telecommunications services.

Another object of the present invention is to provide a telecommunications services architecture which can be utilized to authorize access to the services provided by voice verification of the caller.

Another object of the present invention is to provide a telecommunications services architecture which uses voice recognition to authorize access to the services provided.

Another object of the present invention is to provide a telecommunications service architecture for support of multiple enhanced voice and data services.

Another object of the present invention is to provide a telecommunications service architecture for simultaneously executing on a single delivery platform various enhanced voice and/or data services.

Another object of the present invention is to provide a telecommunications architecture in which access by each subscriber to any service may be accomplished by utilizing a uniform access method.

Another object of the present invention is to provide a telecommunications architecture in which implementation of functional modifications may be made solely through software upgrades.

Another object of the present invention is to provide a telecommunications architecture in which support of multimedia information management including one or more of speech processing, e.g. speech recording and playback, synthesis from text, speech recognition and speaker verification, data processing, e.g. image compression and transmission, facsimile to text, or electronic mail to facsimile conversion is available.

Another object of the present invention is to provide a telecommunications architecture in which system components can be located at the same installation, or separated geographically without affecting system operation.

Another object of the present invention is to provide a telecommunications architecture which makes use of a subscriber's voice to authorize service access.

Another object of the present invention is to provide a telecommunications architecture using voice to both interpret a subscriber's commands using speaker independent voice recognition and to verify a subscriber's identity using speaker dependent voice verification.

Another object of the present invention is to provide a telecommunications architecture which uses a service access sequence in which identification and authorization precede the request for service.

Another object of the present invention is to provide a telecommunications architecture allowing use of a familiar, easy to remember authorization code to gain access to the system, so the service provider may issue a subscriber service card which does not contain the authorization code.

Another object of the present invention is to provide a telecommunications architecture allowing use of more than one method of data entry at any point in the system access sequence.

Another object of the present invention is to provide a telecommunications architecture capable of using network based subscriber dependent speed dialing for commonly used phone numbers which may include the ability to modify those numbers through an interactive on line dialog.

Another object of the present invention is to provide a telecommunications architecture using speaker independent voice access to generic speed dialing numbers.

The telecommunications system of the present invention provides a common platform for the simultaneous deployment of multiple enhanced voice and data services to telecommunications services subscribers. The system includes at least one network server as the central control point of the system. It includes a large general purpose computer and associated database. The network server preferably is inherently fault tolerant since it is responsible for storing the subscriber database. The system is also capable of either centralized or distributed operation without any software changes.

The network server does not interact directly with customers, but acts as a large database for storage of customer information and messages which can be accessed via the voice servers. The network server also provides the ability to connect to other network elements to support enhanced services platform administration and maintenance.

In operation the network server determines that a caller is a valid subscriber, and is responsible for authorizing access to the network of services offered to subscribers. The voice server acts as the customer presentation interface to the network of offered services. The voice servers can be generic. A caller can be connected to any voice server in the system to obtain access to the information stored in the network servers.

## BRIEF DESCRIPTION OF THE DRAWINGS

The present invention will be described with reference to the accompanying drawings, wherein:

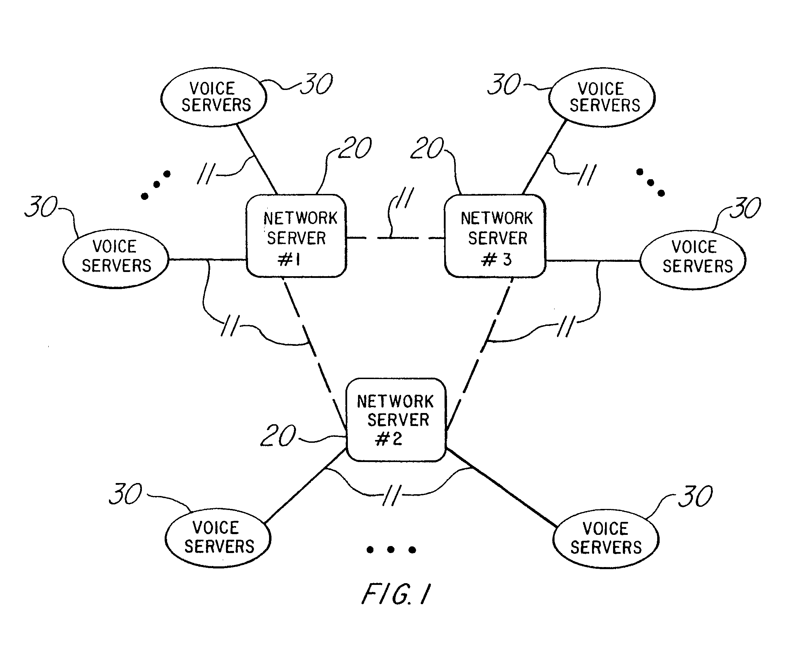

Figure 1 is a block diagram showing the relationship of the voice servers and network servers of the preferred embodiment of the present invention in a 3-node network.

## DESCRIPTION OF THE PREFERRED EMBODIMENT

The present invention is discussed with reference to the following preferred embodiment taken together with the accompanying drawings. It will be understood, however, that various changes may be made to the present invention without departing from the spirit or scope of the invention as set forth in the appended claims.

Referring now to Figure 1, there is shown in block diagram a basic configuration of the enhanced services platform of the preferred embodiment of the present invention. In general, the enhanced services platform includes two elements: a network server 20 and one or more voice servers 30. These two elements are connected via suitable communication data links 11 compatible with the particular telecommunications system with which the enhanced services platform is intended to operate.

The relationship between the network server 20 and the voice servers 30 is such that the network server 20 is capable of being a regional asset connected to voice servers 30 distributed throughout a geographical region. The voice servers 30 represent the customer connection to the telecommunications services available through the system and provide the presentation interface for the customers. The voice servers 30 are connected directly to the telecommunication system switches 12 via suitable data links 13, and physically may be located with the existing telecommunication system switches 12 or concentrated at a small number of other geographical locations without affecting performance, thereby providing one aspect of system flexibility.

The presentation interface provided by the voice server 30 is preferably programmable to provide access to the service the caller is requesting. For example, for a voice messaging customer, the voice server 30 could play previously recorded prompts, such as ("Welcome to the Voice Messaging System"), detect and decode DTMF tones generated when the user presses the keys on his telephone keypad, record and playback that customer's messages, and for very sensitive messages, verify the caller's identity via voice verification. The voice messaging system could also incorporate speech recognition technology to allow customers to optionally use voice commands as an alternative to DTMF tone commands. The voice command feature is especially useful, since it allows customers access to their services even though they may be using a rotary phone, or are at a payphone which disabled the keypad after dialing the phone number. For other services, different technologies can be used to enhance the presentation interface. For example, in an integrated messaging application, text-to-speech technology could be used to "read" electronic mail (E-Mail) messages to a customer away from the terminal in his or her office.

The network server 20 represents the control center for the enhanced services platform of the preferred embodiment of the present invention. It does not interact directly with the customers, but acts as a large database for storage of customer information and messages. The network server 20 also provides system-wide intelligence regarding the features and services available in the telecommunications system, and provides the means for connecting to other network elements to support system administration and maintenance. The network server 20 has the necessary information to determine whether a specific user has access to the service requested by that user, and maintains a record of the service options to which that customer has subscribed.

In the case of the voice messaging example used earlier, the network server 20 verifies that the caller is a valid subscriber and downloads any messages, via the communication data links 11, to the appropriate voice server 30. The voice server 30 then "plays" those messages back to the customer. If the customer left a message, it would be transmitted back to the network server 20 for storage and subsequent retrieval at a later time. The use of the network server 20 for the storage of messages enables the voice server 30 to be generic. A caller can be connected to any voice server 30 in the network and still receive his or her messages, since the messages are stored on the network server 20.

The voice server 30 provides the enhanced services platform with additional application flexibility. The voice servers 30 include one or more voice processing boards which preferably are based upon a high speed digital signal processor such as the TMS320C30 digital signal processor manufactured by Texas Instruments Incorporated. The voice processing boards execute the algorithmic software which provides voice verification, voice record and playback, text-to-speech conversion, and speech recognition. The voice server 30 can be programmed to provide all these different functions and in most cases can also support multiple channels on a single processor. These functions can be combined within applications to provide additional value to basic enhanced telecommunications services.

The voice server 30 is a generic resource, the network server 20 stores the subscriber specific information. Therefore, the customer can access any voice server 30 and still access information resident in the network servers 20. The only information stored on the voice servers 30 are the generic voice prompts, speech software, and the application software for the various enhanced services offered in the telecommunications system.

In addition to the voice server 30 connection, each network server is connected to the other network servers 20 via suitable communication data links 11. These inter-network server connections are used to transfer customer templates between network servers in response to requests transmitted from voice servers 30.

The network servers 20 are responsible for storing the customer template database and coordinating the activities of the voice servers 30. The template database is distributed among all the network server 20 nodes, and each customer template preferably resides in only one network server 20.

The system is designed to be capable of expanding without requiring the replacement of equipment installed during the initial deployment. The system can be expanded in many ways including: by adding voice servers 30 either to accommodate increased call volume or to provide additional services; by adding communication data links to handle increased data communication traffic; by adding network server processors and memory to provide additional services or to maintain system response times as call volumes increase; by adding disk capacity to accommodate growth in the number of customers.

The network server stores the customer template and controls the activities of the voice server 30. The voice server 30 performs the verification "match" using the template downloaded from the network server 20, and the current spoken password. The results of the verification are passed back to the network server, which then can enable a telecommunications switch (not shown) to let the call proceed. The network server 20 also may be utilized to validate specific caller identification codes.

For example, in the Method and Apparatus For Securing Access To Telecommunications Based Assets and Services disclosed in co-pending Application S.N. 507,076 referred to above, if a local network server receives a message to verify a request from a voice server 30, it fetches the specific customer template. If that template is in the local network server 20 database, the template is retrieved, and no data traffic is sent over the data network. However, if the template is not in the local network server database, a message is sent to the network server 20 where the template does reside from where it may then be transferred to the local network server 20.

After the local network server 20 begins the template retrieval process, whether local or over the data network, a message is sent from the local network server to the voice server 30 to which the voice circuit has been established. The reference number contains the necessary information for the network server 20 to determine which voice server 30 is being used and which data link 11 is being used to handle that particular call. The voice server 30 begins the voice authorization session before the template is actually available, and buffers any needed data pending template availability. This is done to minimize customer hold time. Once the local network server 20 has retrieved the customer template, a message is sent to the voice server 30 containing the template file. When the voice server 30 receives the template file the customer verification session can begin. The voice server 30 begins the customer authorization protocol by playing the prompt for the customer to "Say your Password". The voice server 30 then signals the local network server that the verification process has begun. At the end of the processing, the verification decision is transmitted back to the local network server. If the customer is successfully verified, the updated template is returned to the local network server 20. The local network server 20 may then return the updated customer template to the template database. Depending on the design of the distributed customer template database the return of the updated template may take several different forms, some of which are discussed hereinafter. If the caller was not verified, an appropriate message is generated to notify the telecommunications system to provide appropriate customer treatment.

The enhanced services platform architecture also has the ability to accommodate a variety of technologies. By utilizing a voice processing board with high speed digital signal processors, the voice server 30 is able to accommodate a wide range of speech technology. The advantage in this approach is that enhanced services can take advantage of improvements in technology, without requiring major changes to the system. An example is voice messaging. An initial capability can be designed based upon standard voice mail technologies: voice record and playback and DTMF tone detection. An enhanced services platform based voice mail system might include: voice verification and voice command. Future enhancements could include E-Mail which would use voice servers 30 to provide presentation services by integrating a modem algorithm on the voice processing board. E-Mail to FAX conversion or other FAX-related software could also be supported.

One system template storage strategy may be based upon having the template database distributed among the regional network server 20 nodes. Each customer's template exists at only one of the network server 20 nodes. The template "follows" the customer around the system transferring to whichever network server node requires that customer's template. The local network server 20 may use a database key to determine at which network server 20 the customer's template is stored. There are at least two storage strategies which might be used for the template database: storage at last place used, or use of a "home" location.

Storage at last place used implies that the template is constantly moving around the network. A customer who lives in Dallas, Texas, for example would have his template placed initially at the network server in perhaps Fort Worth, Texas. When he travels to San Francisco on business, his first call would cause his template to be moved from Fort Worth to the network server 20 in, assume Stockton, California. The template in Fort Worth is deleted, and is now stored in Stockton. The next call might cause the template to be moved again depending on which network server 20 is handling the call. The storage strategy requires that database lookup tables be modified frequently and raises the possibility that a template might be temporarily unavailable if a caller needs to call again throughout the network. However, the data traffic between network servers 20 is minimized since the updated template is not returned to the previous storage location.

The "home" location alternative simplifies the real-time update requirement of the previous approach at the cost of increased data traffic between the network server 20 sites. Using the example given above, the customer when calling from San Francisco would still have his or her template transferred to Stockton, but at the end of the call the updated template is transferred back to Fort Worth. The template lookup tables do not need updating, but the data links must carry more traffic. The "home" template location approach is believed to provide for a more static, easily maintained database. The architecture of the present invention can easily accommodate these alternative storage strategies.

The enhanced services platform has been designed to provide a common platform for network based delivery of a wide variety of enhanced services such as those disclosed in the above mentioned patent applications which have been incorporated herein by reference.

Preferred Embodiment Features

Various important features of a preferred embodiment are summarized below.

A telecommunications system including a presentation interface for communication with callers to the system, and a database operably connected to the presentation interface for transmission of data between the presentation interface and the database. The presentation interface is responsive to the voice of callers, and may comprise at least one voice signal processing subsystem. The database comprises a plurality of templates, including samples of voices of the subscribers to the system, where these templates are updated upon validated access to the system by the subscribers. The templates of subscriber's voice samples are initially obtained during a subscriber's enrollment as a user of the system, where the enrollment is transparent to the user of the system. Furthermore, a new template of a subscriber's voice samples is created by obtaining a set of new voice samples from a subscriber upon unsuccessful access to the system thereby re-enrolling the subscriber otherwise denied access to the system. These new voice samples are obtained during a re-enrollment procedure which is transparent to the subscriber.

A telecommunications services platform includes a network server and at least one voice server connected for communication with the network server. The voice server comprises at least one voice signal processing subsystem programmed to execute the services offered by the telecommunications system. Each of the voice processing subsystems is programmed to execute either the same services or different services. The network server includes a database containing a plurality of templates having samples of voices of the subscribers to the system. This system further includes means for updating the templates of subscriber's voice samples upon validated access to the system by subscribers, and means for initially obtaining templates of subscriber's voice samples during subscriber's enrollment as a user of the system, wherein the enrollment is transparent to the user of the system. Additionally, this system includes means for obtaining a new template of a subscriber's voice samples upon unsuccessful access to the system thereby re-enrolling the subscriber otherwise denied access to the system, wherein the new voice samples are obtained during a re-enrollment procedure which is transparent to the subscriber.

A network server for use in a telecommunications system includes a database with a plurality of templates having samples of voices of the subscribers to the system, means for updating the templates of subscriber's voice samples upon validated access to the system by subscribers, and means for initially obtaining templates of subscriber's voice samples during a subscriber's enrollment as a user of the system, wherein the enrollment is transparent to the user of the system. Additionally, the system includes means for obtaining a new template of a subscriber's voice samples upon unsuccessful access thereby re-enrolling the subscriber otherwise denied access to the system, wherein these new voice samples are obtained during a re-enrollment procedure which is transparent to the subscriber.

**Claims**

1. A telecommunications system comprising:
   a presentation interface for communication with callers to the system;
   a database operably connected to said presentation interface for transmission of data between said presentation interface and said database.

2. A telecommunications services presentation interface comprising, a data link for communication with a telecommunications network, and at least one voice signal processor connected to said data link.

3. The telecommunications services presentation interface as defined in Claim 2, wherein said voice signal processor comprises a plurality of voice processing subsystems programmed to execute the services offered by the telecommunications system.

4. The telecommunications services presentation interface as defined in Claim 3, wherein each of said voice processing subsystems is programmed to execute the same services.

5. The telecommunications services presentation interface as defined in Claim 4, wherein at least two of said voice processing subsystems are programmed to execute different services.

6. A telecommunications network for providing a plurality of telecommunication services in a telecommunications system comprising:
   switching means for directing telecommunications transmissions to and from the network;

signal transfer means for controlling messages between network elements;

data control means for storing a subscriber database;

a network server coupled to said data control means; and

a telecommunications services interface coupled to said network server.

7. The telecommunications network as defined in Claim 6, wherein said telecommunications services interface comprises a voice server.

8. The telecommunications network as defined in Claim 6, wherein said telecommunications services interface is responsive to the voice of callers.

9. The telecommunications network as defined in Claim 8, wherein said presentation interface comprises at least one voice signal processing subsystem.

10. The telecommunications network as defined in Claim 6, wherein said network server comprises a database including a plurality of templates having samples of voices of the subscribers to the system.

11. The telecommunications network as defined in Claim 10, further comprising means for updating the templates of subscriber's voice samples upon validated access to the system by subscribers.

12. The telecommunications network as defined in Claim 10, further comprising means for initially obtaining templates of subscriber's voice samples during subscriber's enrollment as a user of the system.

13. The telecommunications network as defined in Claim 12, wherein said enrollment is transparent to the user of the system.

14. The telecommunications network as defined in Claim 12, further comprising means for obtaining a new template of a subscriber's voice samples upon unsuccessful access to the system thereby re-enrolling the subscriber otherwise denied access to the system.

15. The telecommunications network as defined in Claim 14, wherein said new voice samples are obtained during a re-enrollment procedure which is transparent to the subscriber.

FIG. 1